# FASCICULE DE BREVET EUROPEEN

(11) **EP 2 739 842 B1**
(45) Date de publication et mention de la délivrance du brevet: **24.06.2015**
(21) Numéro de dépôt: 12750457.9
(22) Date de dépôt: 31.07.2012
(51) Int. Cl.: F02K 1/76

(54) **PROCEDE DE SURVEILLANCE DES MOYENS DE VERROUILLAGE D'UN SYSTEME ELECTRIQUE D'INVERSION DE POUSSEE POUR TURBOMACHINE**
VERFAHREN ZUR ÜBERWACHUNG DER VERRIEGELUNG EINES ELEKTRISCHEN SCHUBUMKEHRSYSTEMS FÜR EINEN TURBINENMOTOR
METHOD FOR MONITORING THE LOCKING MEANS OF AN ELECTRICAL THRUST REVERSAL SYSTEM FOR A TURBINE ENGINE

(30) Priorité: 05.08.2011 FR 1157201
(43) Date de publication de la demande: 11.06.2014
(73) Titulaire: Snecma, 75015 Paris (FR)
(72) Inventeur: COLIN, Antoine, Olivier, François, F-77550 Moissy-Cramayel Cedex (FR); GUEIT, Nicolas, Marie, Pierre, F-77550 Moissy-Cramayel Cedex (FR); IBANEZ GARCIA, Catherine Dorothée, Josette, F-77550 Moissy-Cramayel Cedex (FR)
(74) Mandataire: Camus, Olivier Jean-Claude
(86) Numéro de dépôt international: PCT/FR2012/051805
(87) Numéro de publication internationale: WO 2013/021120

(56) Documents cités:
- EP-A1- 0 843 089
- FR-A1- 2 920 201
- FR-A1- 2 928 681

## Description

### DOMAINE TECHNIQUE

La présente invention concerne un procédé de surveillance des moyens de verrouillage d'un système électrique d'inversion de poussée pour turbomachine. La présente invention concerne également un calculateur apte à mettre en oeuvre un tel procédé, ainsi qu'une turbomachine comportant un tel calculateur.

### ETAT DE LA TECHNIQUE ANTERIEUR

Les turbomachines sont classiquement équipées d'inverseurs de poussée qui permettent d'orienter vers l'avant la poussée exercée par la turbomachine afin de freiner l'avion, ce qui permet notamment de réduire les distances de freinage lors de l'atterrissage.

En vol, l'inverseur de poussée doit être verrouillé. Par contre, lors de l'atterrissage, l'inverseur de poussée doit pouvoir être déployé. Afin d'éviter tout risque de déploiement de l'inverseur de poussée en vol, celui-ci est généralement verrouillé en position fermée par trois moyens de verrouillage indépendants qui sont normalement en position fermée, et qui doivent être placés les trois en position ouverte pour que l'inverseur de poussée puisse se déployer. Dans le cas d'un inverseur de poussée électrique, le système d'actionnement de l'inverseur est réalisé par un moteur électrique, contrôlé et piloté par un boîtier de commande dédié.

EP 0 843 089 décrit un tel inverseur de poussée équipé de trois moyens de verrouillage.

Pour des raisons de sécurité, pour déverrouiller les moyens de verrouillage qui empêchent le déploiement de l'inverseur de poussée, au moins deux lignes de commandes indépendantes sont utilisées.

Pour que l'inverseur de poussée soit déployé, il faut impérativement que ces trois lignes de commande indépendantes soient activées. L'activation de ces trois lignes de commande entraîne alors l'ouverture des trois moyens de verrouillage, et c'est si et seulement si ces trois moyens de verrouillage sont ouverts que l'inverseur de poussée peut se déployer.

Ainsi, si un des moyens de verrouillage ne fonctionne pas, l'inverseur de poussée ne va pas s'ouvrir et le pilote ne va découvrir que l'inverseur de poussée ne fonctionne pas qu'au moment où il demande à l'inverseur de poussée de s'ouvrir, c'est-à-dire généralement à l'atterrissage, qui est un moment critique pour le pilote. En outre, dans le cas où un des inverseurs électriques se déploie et pas l'autre, cela peut entraîner des dissymétries de poussées pendant l'atterrissage et impacter la manoeuvrabilité de l'aéronef.

### EXPOSE DE L'INVENTION

L'invention vise à remédier aux inconvénients de l'état de la technique en proposant un procédé de surveillance des moyens de verrouillage d'un système électrique d'inversion de poussée qui permette au pilote de s'assurer que son inverseur de poussée pourra bien s'ouvrir en cas de besoin.

Pour ce faire, est proposé selon un premier aspect de l'invention, un procédé de surveillance selon la revendication 1.

Ce procédé est mis en oeuvre lorsque l'avion ne vole pas. Ce procédé peut par exemple être mis en route automatiquement lors du démarrage des calculateurs ou alors il peut être mis en route manuellement, notamment à l'initiative du pilote, par exemple pendant la phase pendant laquelle les passagers embarquent dans l'avion.

Ce procédé de test de chacun des moyens de verrouillage permettant de vérifier que les moyens de verrouillage peuvent bien s'ouvrir a lieu lorsque l'avion ne vole pas, pour des raisons de sécurité, et pendant une phase au cours de laquelle le pilote n'a pas besoin de l'inverseur de poussée et lorsque la turbomachine ne tourne pas, ce qui empêche toute conséquence dangereuse si un quelconque élément de l'inverseur de poussée est en panne et peut entraîner des déplacements de l'inverseur de façon non désirée.

Le procédé permet donc au pilote de pouvoir tester très simplement si l'inverseur de poussée pourra se déployer ou non. L'invention présente l'avantage majeur de permettre au pilote de connaître une partie de l'état du système électrique d'inversion de poussée avant de l'utiliser. Les pannes masquées des moyens de verrouillage de l'inverseur sont détectées avant l'utilisation opérationnelle de l'inverseur. L'invention permet ainsi de réduire les risques d'incident pendant la phase d'atterrissage.

Le procédé selon l'invention peut également présenter une ou plusieurs des caractéristiques ci-dessous prises individuellement ou selon toutes les combinaisons techniquement possibles.

Avantageusement, le procédé selon l'invention comporte en outre une étape de vérification de la fermeture du moyen de verrouillage suite à l'étape d'envoi de la commande de fermeture des moyens de verrouillage, ce qui permet au pilote de s'assurer que l'inverseur de poussée s'est bien refermé avant qu'il décolle.

La vérification de la fermeture et de l'ouverture des moyens de verrouillage sont de préférence effectuées par le calculateur grâce à des capteurs de proximité.

Avantageusement, le système d'inversion électrique comporte plusieurs moyens de verrouillage de l'inverseur de poussée. Dans ce cas, selon différents modes de réalisation :
- Les étapes d'envoi d'une commande d'ouverture du moyen de verrouillage, de vérification de l'ouverture dudit moyen de verrouillage, d'envoi d'une commande de fermeture peuvent alors avoir lieu successivement pour le premier moyen de verrouillage, puis pour le deuxième moyen de verrouillage...jusqu'au dernier moyen de verrouillage, ou alors ;
- L'étape d'envoi de la commande d'ouverture de tous les moyens de verrouillage a lieu, puis l'étape de vérification de l'ouverture de tous les moyens de verrouillage a lieu, puis l'étape de fermeture de tous les verrous a lieu.

Selon un mode de réalisation préférentiel, le système électrique d'inversion de poussée comporte un inverseur de poussée et un premier, un deuxième et un troisième moyens de verrouillage, les moyens de verrouillage pouvant être placés dans une position fermée dans laquelle le déploiement de l'inverseur de poussée n'est pas possible, et dans une position ouverte dans laquelle le déploiement de l'inverseur de poussée est possible, l'ouverture et la fermeture du premier et du deuxième moyens de verrouillage étant commandées par un boitier de commande, le boitier de commande et le troisième moyen de verrouillage étant alimentés par un réseau électrique de l'avion, l'étape d'envoi de la commande d'ouverture des moyens de verrouillage comportant les sous étapes suivantes :
- Envoi au réseau électrique de l'avion d'un ordre de mise sous tension du boîtier de commande et du troisième verrou;
- Envoi au boîtier de commande d'un ordre d'ouverture du premier et du deuxième moyens de verrouillage.

Ainsi, le procédé consiste à ouvrir les moyens de verrouillage de façon à les tester en suivant le protocole qui est normalement utilisé pour déployer l'inverseur de poussée, et ce, au sol, alors que l'inverseur de poussée n'est pas utilisé et que la turbomachine est à l'arrêt.

Ce procédé est de préférence mis en oeuvre par un calculateur, qui est de préférence le FADEC (en anglais « Full Authority Digital Engine Control »).

Avantageusement, l'étape d'envoi de la commande de fermeture des moyens de verrouillage comporte les sous-étapes suivantes :
- Envoi au boîtier de commande d'un ordre de fermeture du premier et du deuxième moyens de verrouillage ;
- Envoi au réseau électrique de l'avion d'un ordre d'arrêt de la mise sous tension du troisième moyen de verrouillage ;
- Envoi au réseau électrique de l'avion d'un ordre d'arrêt de la mise sous tension du boitier de commande.

L'étape d'envoi au réseau électrique de l'avion d'un ordre d'arrêt de la mise sous tension est de préférence une étape de commande d'ouverture d'un contacteur pour arrêter la mise sous tension.

Selon différents modes de réalisation :
- le procédé peut être mis en route automatiquement, notamment par le calculateur, ou bien
- il peut être mis en route manuellement, notamment par le pilote.

Dans les deux cas, le procédé est de préférence mis en route à chaque allumage du calculateur, ce qui permet d'optimiser les actions de maintenance dans la mesure où l'état des moyens de verrouillage de l'inverseur de poussée est testé à chaque démarrage du FADEC. Ainsi, le moindre problème est détecté dès son occurrence, ce qui permet une intervention optimale des équipes de maintenance.

Avantageusement, le procédé comporte en outre une étape d'envoi d'un message d'alerte si au moins un des moyens de verrouillage ne s'est pas ouvert, afin d'alerter le pilote qu'il ne pourra vraisemblablement pas compter sur l'inverseur de poussée lors de l'atterrissage.

Avantageusement, le procédé comporte en outre une étape d'enregistrement du résultat de l'étape de vérification de l'ouverture des moyens de verrouillage, ce qui permet de garder en mémoire les pannes éventuelles des moyens de verrouillage, afin d'optimiser les opérations de maintenance.

Un deuxième aspect de l'invention concerne également un calculateur, et notamment le FADEC, configuré de manière à mettre en oeuvre le procédé selon le premier aspect de l'invention.

Un troisième aspect de l'invention concerne également une turbomachine comportant un calculateur selon le deuxième aspect de l'invention.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un système électrique d'inversion de poussée auquel s'applique le procédé selon l'invention ;
- La figure 2, une représentation schématique des étapes d'un procédé selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

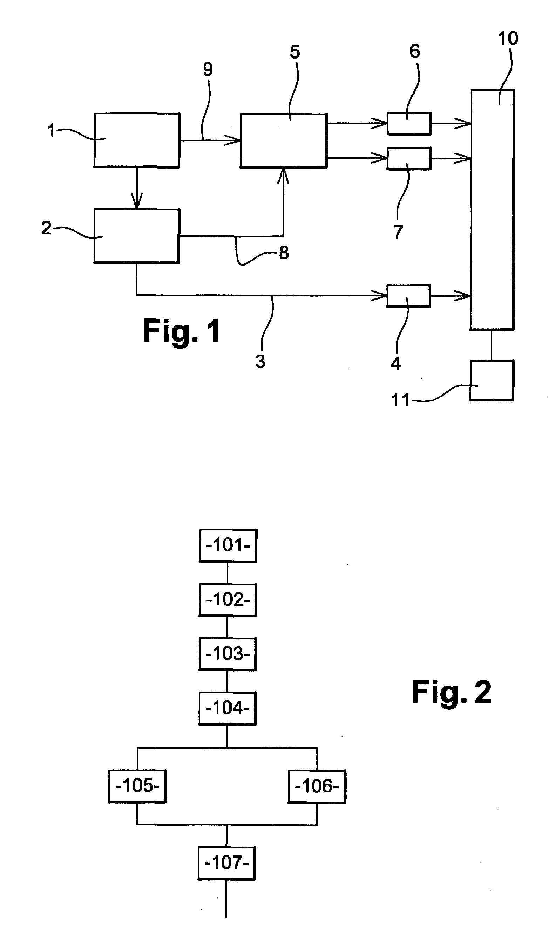

La figure 1 représente un système électrique d'inversion de poussée auquel s'applique le procédé selon l'invention. Ce système électrique d'inversion de poussée est de préférence contrôlé par un calculateur 1 qui est de préférence le FADEC.

Le système électrique d'inversion de poussée comporte un inverseur de poussée 10 qui peut se déployer de façon à orienter vers l'avant de la turbomachine une partie de la poussée exercée par le moteur afin de freiner l'aéronef.

Le système électrique d'inversion de poussée comporte également trois moyens de verrouillage 4, 6, 7 qui empêchent le déploiement de l'inverseur de poussée 10 lorsqu'ils sont en position fermée et qui autorisent le déploiement de l'inverseur de poussée 10 lorsqu'ils sont les trois en position ouverte.

Le système électrique d'inversion de poussée comporte également un boitier de commande 5, qui est lui même commandé par le calculateur 1, et qui est alimenté en énergie par un réseau électrique de l'avion 2. Le boîtier de commande 5 permet de commander le premier et le deuxième moyen de verrouillage 6, 7 en ouverture et en fermeture. Pour que le boîtier de commande puisse ouvrir le premier et le deuxième moyen de verrouillage 6, 7, il doit avoir été alimenté par le réseau électrique de l'avion 2. Le boîtier de commande 5 est généralement alimenté en 115 V alternatif triphasé.

Le troisième moyen de verrouillage 4 lui est relié directement au réseau électrique de l'avion 2. Le troisième moyen de verrouillage 4 s'ouvre lorsqu'il est alimenté en tension par le réseau électrique de l'avion 2. Le troisième moyen de verrouillage 4 est généralement alimenté en 115 V alternatif monophasé.

Le système électrique d'inversion de poussée comporte également un moteur électrique 11 permettant de déployer l'inverseur de poussée 10 une fois que les moyens de verrouillage sont ouverts.

Le procédé selon l'invention est de préférence mis en route avant chaque décollage de l'avion par le calculateur 1. Le procédé selon l'invention peut par exemple être mis en route automatiquement à chaque démarrage du calculateur 1.

Le procédé selon l'invention comporte tout d'abord une étape de vérification que les conditions pour réaliser le test sont réunies. Le procédé peut ainsi par exemple comporter une étape de vérification que l'avion se trouve bien au sol.

Le procédé comporte ensuite une étape 101 d'envoi d'une commande d'ouverture des moyens de verrouillage. Pour cela, le calculateur 1 demande tout d'abord au réseau électrique de l'avion 2 d'alimenter le boîtier de commande 5. Dans cet exemple, le boîtier de commande 5 est alimenté en 115 V alternatif triphasé. Le calculateur 1 demande ensuite au réseau électrique de l'avion 5 d'alimenter le troisième moyen de verrouillage 4 de façon à le déverrouiller. Le calculateur demande ensuite au boitier de commande 5 de déverrouiller le premier et le deuxième moyen de verrouillage 6, 7.

Le procédé comporte ensuite une étape 102 de vérification de l'ouverture des moyens de verrouillage. Cette étape est de préférence effectuée par le calculateur 1 qui contrôle, par exemple grâce à des capteurs de proximité auquel il est relié, que les moyens de verrouillage 4, 6, 7 se sont bien ouverts.

Le procédé comporte ensuite une étape 103 d'envoi d'une commande de fermeture des moyens de verrouillage. Pour cela, le calculateur 1 ordonne de préférence au boitier de commande 5 de verrouiller le premier et le deuxième moyens de verrouillage 6, 7. Le calculateur 1 demande ensuite au réseau électrique de l'avion 2 d'arrêter l'alimentation du troisième moyen de verrouillage 4 de façon à le verrouiller. Enfin, le calculateur 1 demande au réseau électrique de l'avion d'arrêter l'alimentation du boîtier de commande.

Le procédé comporte une étape 104 au cours de laquelle le calculateur vérifie, via les capteurs de proximité, que les moyens de verrouillage 4, 6, et 7 se sont bien fermés.

Le procédé comporte une étape 105 d'envoi d'un message d'alerte si au moins un des moyens de verrouillage ne s'est pas ouvert. Le calculateur envoie alors de préférence le message d'alerte au poste de pilotage de l'avion, par exemple sous la forme d'un signal lumineux, à l'attention du pilote.

Le procédé comporte une étape 106 d'envoi d'un message d'alerte si au moins un des moyens de verrouillage ne s'est pas refermé. Le décollage de l'avion peut alors être empêché.

Ainsi, le procédé selon l'invention permet d'informer le pilote facilement et sans nécessiter une grande puissance de calcul du bon fonctionnement ou du non fonctionnement des moyens de verrouillage permettant le déploiement de l'inverseur de poussée. En cas de défaillance des moyens de verrouillage, le pilote peut alors se préparer à atterrir sans utiliser l'inverseur de poussée.

Le procédé comporte une étape 107 d'enregistrement du résultat de l'étape de vérification de l'ouverture des moyens de verrouillage et éventuellement de l'étape de fermeture, ce qui permet de savoir exactement à partir de quand les moyens de verrouillage ont été en panne. Les pannes sont de préférence enregistrées dans le système centralisé de maintenance de l'avion de façon à faciliter le travail du personnel de maintenance.

Naturellement, l'invention n'est pas limitée aux modes de réalisation décrits en référence aux figures et des variantes pourraient être envisagées sans sortir du cadre de l'invention.

## Revendications

1. Procédé de surveillance des moyens de verrouillage (4, 6, 7) d'un système électrique d'inversion de poussée pour turbomachine dans un avion, ledit système électrique comportant un inverseur de poussée (10) et un premier (4), un deuxième (6) et un troisième moyens de verrouillage (7), les moyens de verrouillage (4, 6, 7) pouvant être placés dans une position fermée dans laquelle le déploiement de l'inverseur de poussée (10) n'est pas possible, et dans une position ouverte dans laquelle le déploiement de l'inverseur de poussée (10) est possible, l'ouverture et la fermeture du premier et du deuxième moyens de verrouillage (6, 7) étant commandées par un boitier de commande (5), le boitier de commande (5) et le troisième moyen de verrouillage (4) étant alimentés par un réseau électrique de l'avion (2), **caractérisé en ce que** le procédé est réalisé par un calculateur (1) avant le décollage de l'avion et comporte les étapes suivantes :
• une étape d'envoi (101) d'une commande d'ouverture des moyens de verrouillage (4, 6, 7), comportant les sous-étapes suivantes :
∘ Envoi au réseau électrique de l'avion (2) d'un ordre de mise sous tension du boîtier de commande (5) et du troisième moyen de verrouillage (4);
∘ Envoi au boîtier de commande (5) d'un ordre d'ouverture du premier et du deuxième moyens de verrouillage (6, 7) ;
• Vérification de l'ouverture desdits moyens de verrouillage (102);
• Envoi d'une commande de fermeture des moyens de verrouillage (103).

2. Procédé de surveillance selon la revendication précédente, **caractérisé en ce qu'**il comporte en outre une étape (104) de vérification de la fermeture des moyens de verrouillage (4, 6, 7) suite à l'étape (103) d'envoi de la commande de fermeture des moyens de verrouillage.

3. Procédé de surveillance selon la revendication précédente, **caractérisé en ce que** l'étape (103) d'envoi de la commande de fermeture des moyens de verrouillage (4, 6, 7) comporte les sous-étapes suivantes :
- Envoi au boîtier de commande (5) d'un ordre de fermeture du premier et du deuxième moyens de verrouillage (6, 7) ;
- Envoi au réseau électrique de l'avion (2) d'un ordre d'arrêt de la mise sous tension du troisième moyen de verrouillage (4);
- Envoi au réseau électrique de l'avion (2) d'un ordre d'arrêt de la mise sous tension du boitier de commande (5).

4. Procédé de surveillance selon l'une des revendications précédentes, **caractérisé en ce qu'**il est mis en route automatiquement à l'allumage du calculateur (1).

5. Procédé de surveillance selon l'une des revendications 1 à 3, **caractérisé en ce qu'**il est mis en route manuellement.

6. Procédé de surveillance selon l'une des revendications précédentes, comportant en outre une étape (105) d'envoi d'un message d'alerte si au moins un des moyens de verrouillage (4, 6, 7) ne s'est pas ouvert.

7. Procédé de surveillance selon l'une des revendications précédentes, comportant en outre une étape (107) d'enregistrement du résultat de l'étape de vérification de l'ouverture des moyens de verrouillage (4, 6, 7).

8. Calculateur (1) configuré de manière à mettre en oeuvre le procédé selon l'une des revendications précédentes.

9. Turbomachine comportant un calculateur (1) selon la revendication précédente.

## Patentansprüche

1. Überwachungsverfahren von Verriegelungsmitteln (4, 6, 7) eines elektrischen Schubumlenkungssystems für ein Turbinenwerk in einem Flugzeug, wobei das genannte elektrische System einen Schubumlenker (10) und ein erstes (4), ein zweites (6) und ein drittes Verriegelungsmittel (7) umfasst, wobei die Verriegelungsmittel (4, 6, 7) in eine geschlossen Position platziert werden können, in der die Umsetzung des Schubumlenkers (10) nicht möglich ist, und in eine offene Position, in der die Umsetzung des Schubumlenkers (10) möglich ist, wobei die Öffnung und der Verschluss des ersten und des zweiten Verriegelungsmittels (6, 7) durch einen Steuerkasten (5) gesteuert werden, wobei der Steuerkasten (5) und das dritte Verriegelungsmittel (4) durch ein elektrisches Netz des Flugzeugs versorgt werden, **dadurch gekennzeichnet, dass** das Verfahren vor dem Abheben des Flugzeugs durch einen Rechner (1) realisiert wird und die folgenden Stufen umfasst:
• eine Versandstufe (101) eines Öffnungsbefehls der Verriegelungsmittel (4, 6, 7), umfassend die folgenden Unterstufen;
∘ Versand eines Unter-Spannung-Setzen-Befehls des Steuerkastens (5) und des dritten Verriegelungsmittels (4) an das elektrische Netz des Flugzeugs (2);
∘ Versand eines Öffnungsbefehls des ersten und des zweiten Verriegelungsmittels (6, 7) an den Steuerkasten (5);
• Überprüfung der Öffnung der genannten Verriegelungsmittel (102);
• Versand eines Verschlussbefehls der genannten Verriegelungsmittel (103).

2. Überwachungsverfahren gemäß dem voranstehenden Anspruch, **dadurch gekennzeichnet, dass** es darüber hinaus eine Überprüfungsstufe (104) des Verschlusses der Verriegelungsmittel (4, 6, 7) im Anschluss an die Versandstufe (103) des Verschlussbefehls der Verriegelungsmittel umfasst.

3. Überwachungsverfahren gemäß dem voranstehenden Anspruch, **dadurch gekennzeichnet, dass** die Versandstufe (103) des Verschlussbefehls der Verriegelungsmittel (4, 6, 7) die folgenden Unterstufen umfasst:
- Versand eines Verschlussbefehls des ersten und des zweiten Verriegelungsmittels (6, 7) an den Steuerkasten (5);
- Versand eines Abschaltbefehls des Unter-Spannung-Setzens des dritten Verriegelungsmittels (4) an das elektrische Netz des Flugzeugs (2) ;
- Versand eines Abschaltbefehls des Unter-Spannung-Setzens des Steuerkastens (5) an das elektrische Netz des Flugzeugs (2).

4. Überwachungsverfahren gemäß einem der voranstehenden Ansprüche, **dadurch gekennzeichnet, dass** es beim Einschalten des Rechners (1) automatisch in Betrieb gesetzt wird.

5. Überwachungsverfahren gemäß Anspruch 1 bis 3, **dadurch gekennzeichnet, dass** es manuell in Betrieb gesetzt wird.

6. Überwachungsverfahren gemäß einem der voranstehenden Ansprüche, umfassend darüber hinaus eine Versandstufe (105) einer Warnmeldung, wenn sich wenigstens eines der Verriegelungsmittel (4, 6 7) nicht geöffnet hat.

7. Überwachungsverfahren gemäß einem der voranstehenden Ansprüche, darüber hinaus umfassend eine Eintragungsstufe (107) des Ergebnisses der Überprüfungsstufe der Öffnung der Verriegelungsmittel (4, 6, 7).

8. Rechner (1), der derart konfiguriert ist, dass das Verfahren gemäß einem der voranstehenden Ansprüche umgesetzt wird.

9. Turbinentriebwerk, umfassend einen Rechner (1) gemäß dem voranstehenden Anspruch.

## Claims

1. A method for monitoring locking means (4, 6, 7) of a thrust reversing electrical system for an aircraft turbomachine, said electrical system having a thrust reverser (10) and a first (4), a second (6) and a third locking means (7), the locking means (4, 6, 7) being able to be placed in a closed position in which extending the thrust reverser (10) is not possible, and in an open position in which extending the thrust reverser (10) is possible, opening and closing the first and second locking means (6, 7) being controlled by a control box (5), the control box (5) and the third locking mean (4) being powered by an aircraft electrical network (2), **characterised in that** the method is carried out by a computer (1) before the plane take-off, and comprises the following steps:
• a step of sending (101) a command for opening the locking means (4, 6, 7), comprising the following sub-steps:
o sending to the aircraft electrical network (2) an order for energizing the control box (5) and the third locking mean (4);
o sending to the control box (5) an order for opening the first and second locking means (6, 7);
• checking the opening of said locking means (102);
• sending a command for closing the locking means (103).

2. The monitoring method according to the preceding claim, **characterised in that** it further comprises a step (104) of checking the closing of the locking means (4, 6, 7) following the step (103) of sending the command for closing the locking means.

3. The monitoring method according to the preceding claim, **characterised in that** the step (103) of sending the command for closing the locking means (4, 6, 7) comprises the following sub-steps:
- sending to the control box (5) an order for closing the first and second locking means (6, 7);
- sending to the aircraft electrical network (2) an order for stopping energizing the third locking means (4);
- sending to the aircraft electrical network (2) an order for stopping energizing the control box (5).

4. The monitoring method according to one of the preceding claims, **characterised in that** it is automatically started upon switching on the computer (1).

5. The monitoring method according to one of claims 1 to 3, **characterised in that** it is manually started.

6. The monitoring method according to one of the preceding claims, further comprising a step (105) of sending a warning message if at least one of the locking means (4, 6, 7) has not opened.

7. The monitoring method according to one of the preceding claims, further comprising a step (107) of recording the result of the step of checking the opening of the locking means (4, 6, 7).

8. A computer (1) configured so as to implement the method according to one of the preceding claims.

9. A turbomachine comprising a computer (1) according to the preceding claim.
